# FASCICULE DE BREVET EUROPEEN

(11) **EP 2 780 191 B1**
(45) Date de publication et mention de la délivrance du brevet: **16.12.2015**
(21) Numéro de dépôt: 12794409.8
(22) Date de dépôt: 30.10.2012
(51) Int. Cl.: B60N 2/00, B60N 2/02

(54) **GLISSIERE DE SIEGE**
SITZSCHIENE
SEAT SLIDE

(30) Priorité: 16.11.2011 FR 1160402
(43) Date de publication de la demande: 24.09.2014
(73) Titulaire: Peugeot Citroën Automobiles SA, 78140 Vélizy Villacoublay (FR)
(72) Inventeur: DEPLAT, Frederic, F-94350 Villiers Sur Marne (FR)
(74) Mandataire: Jeannin, Laurent Jean-Pierre
(86) Numéro de dépôt international: PCT/FR2012/052508
(87) Numéro de publication internationale: WO 2013/072594

(56) Documents cités:
- EP-A2- 1 914 110
- FR-A1- 2 740 744

## Description

La présente invention concerne de manière générale un siège de véhicule monté sur une glissière électrique et un procédé de réglage de la position de ce siège.

Il est connu dans l'art antérieur des sièges de véhicule dont le réglage de la position longitudinale est effectué par une glissière électrique. Une telle glissière assure la fonction de translation vers l'avant ou l'arrière sous la commande d'un moteur électrique, comme par exemple le système décrit dans le document FR 2 740 744. Néanmoins, ce système présente l'inconvénient de ne pas permettre d'offrir un grand espace au passager assis derrière ce siège même si ce dernier est inoccupé et agencé en position de fin de course vers l'avant.

Le document FR 2 907 385 décrit de son côté un siège monté sur une glissière électrique apte à être commandé par un passager assis derrière ce siège ou désirant s'assoir derrière ce siège. Ce système présente également l'inconvénient de ne pas proposer un grand espace pour le passager arrière si le siège est vide.

Un but de la présente invention est de répondre aux inconvénients des documents de l'art antérieur mentionnés ci-dessus et en particulier, tout d'abord, de proposer un siège de véhicule apte à proposer un grand espace pour un passager assis derrière ce siège, tout en restant d'utilisation sécurisée.

Pour cela un premier aspect de l'invention concerne un procédé de commande électrique d'un siège de véhicule comprenant les étapes consistant à :
- détecter la présence d'un occupant sur le siège ;
- détecter une demande de mouvement vers l'avant du siège ;
- autoriser le mouvement vers l'avant du siège dans une première plage de positions si un occupant est détecté sur le siège à l'étape de détection ;
- autoriser le mouvement vers l'avant dans une deuxième plage de positions comprenant la première plage de positions et une plage supplémentaire de sur-course vers l'avant, si aucun occupant sur le siège n'est détecté à l'étape de détection.

Le procédé selon l'invention offre avantageusement la possibilité d'avancer le siège dans une position comprise dans une sur-course si le siège est inoccupé. Tout l'espace perdu habituellement devant le siège s'il est inoccupé est reporté à l'arrière pour un passager assis derrière le siège, ou pour entreposer des charges encombrantes. Par ailleurs, le procédé selon l'invention ne met pas en danger un occupant assis sur le siège, car le déplacement dans la zone de sur-course n'est possible que si le siège est vide.

De manière avantageuse, la plage supplémentaire de sur-course comporte une fin de course positionnant le siège contre un obstacle situé devant le siège. Le procédé permet de gagner toute la place disponible entre le siège et son environnement avant, comme un planche de bord si le siège se trouve au premier rang, ou un autre siège, si le siège est positionné à un rang intermédiaire ou arrière du véhicule.

De manière avantageuse, la demande de mouvement vers l'avant est effectuée par un occupant assis derrière le siège. Cette mise en oeuvre sécurise encore le procédé. Une double condition est appliquée : le siège doit être vide, et c'est un occupant arrière qui effectue la demande de mouvement vers l'avant.

De manière avantageuse, la détection de la demande de mouvement vers l'avant est effectuée par la détection de l'utilisation d'un commutateur accessible uniquement à l'occupant assis derrière le siège. Le commutateur agencé pour n'être accessible que par l'occupant derrière le siège garantit que la demande de mouvement sera effectuée par ce dernier.

Un second aspect de l'invention est un siège de véhicule pour la mise en oeuvre du procédé selon le premier aspect de l'invention et comprenant au moins un capteur de présence occupant apte à détecter la présence d'un occupant sur le siège et au moins une glissière électrique avec deux capteurs de fin de course définissant un première plage de positions, caractérisé en ce qu'il comporte un troisième capteur de fin de course définissant une deuxième plage de positions comprenant la première plage de positions et une plage supplémentaire de sur-course vers l'avant.

De manière avantageuse, le troisième capteur de fin de course définit une position du siège contre un obstacle situé devant le siège

Un dernier aspect de l'invention est un véhicule automobile comportant au moins un siège selon le deuxième aspect de l'invention et dont la position est commandée par le procédé selon le premier aspect de l'invention.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente un siège dont la position est gérée par le procédé selon l'invention ;
- la figure 2 représente le siège de la figure 1 en position totalement avancée.

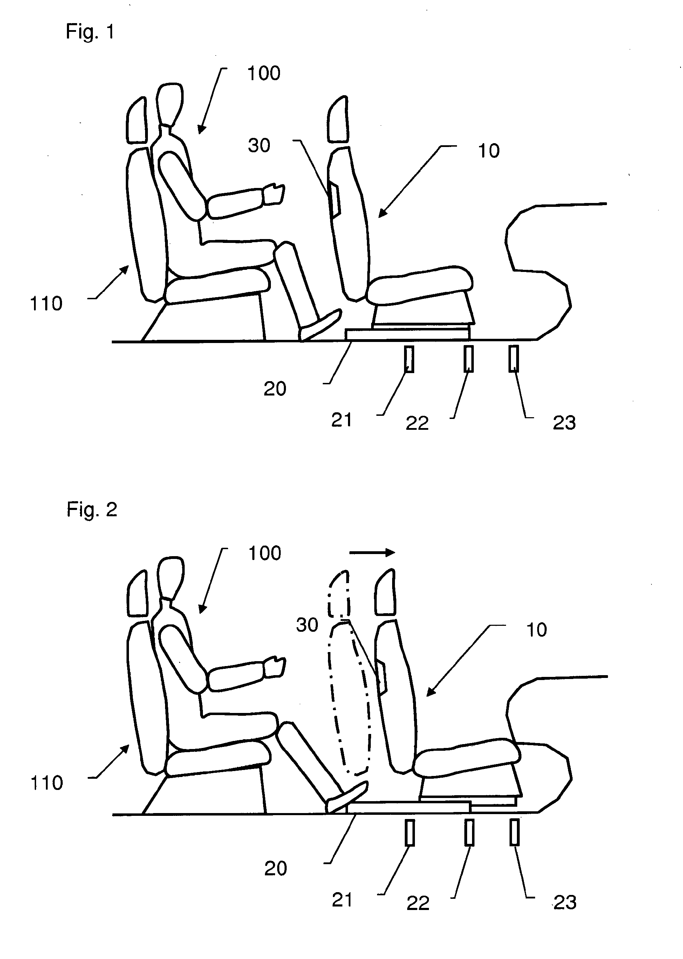

La figure 1 représente un siège 10 en position maximale avant, si un occupant est assis sur ce siège 10. Le siège 10 est relié au plancher du véhicule par des glissières électriques 20, qui sont aptes à faire avancer ou reculer le siège 10 sous la commande d'un moteur électrique non représenté, ente les capteurs de fin de course 21 et 22. Les capteurs 21 et 22 définissent une plage de positions que le siège peut occuper si un occupant est assis dessus. Même en position avancée, il reste un espace suffisant pour l'occupant entre le siège et la planche de bord. Comme représenté sur la figure, le siège 10 est vide et un grand espace devant ce siège est perdu. Afin de reporter cet espace libre pour le passager 100 assis dans le siège 110, celui ci actionne un commutateur 30 agencé dans son environnement immédiat (sur la face arrière du dossier du siège 10 par exemple) et le siège 10 peut coulisser vers l'avant, comme cela est représenté à la figure 2.

La figure 2 représente le siège 10 de la figure 1 en position totalement avancée si aucun occupant n'est assis sur le siège 10. Un capteur 23 de fin de sur-course vers l'avant est agencé se sorte que le siège 10 en fin de sur-course vers l'avant soit positionné contre la planche de bord, afin de libérer le plus de place possible pour le passager arrière. Ainsi, la présente invention permet de reporter l'espace libre qui serait perdu devant le siège vers son passager arrière si le siège n'est pas occupé.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Procédé de commande électrique d'un siège (10) de véhicule comprenant les étapes consistant à :
- détecter la présence d'un occupant sur le siège (10) ;
- détecter une demande de mouvement vers l'avant du siège (10) ;
- autoriser le mouvement vers l'avant du siège (10) dans une première plage de positions si un occupant est détecté sur le siège (10) à l'étape de détection ;
- autoriser le mouvement vers l'avant dans une deuxième plage de positions comprenant la première plage de positions et une plage supplémentaire de sur-course vers l'avant, si aucun occupant sur le siège (10) n'est détecté à l'étape de détection.

2. Procédé selon la revendication 1, **caractérisé en ce que** la plage supplémentaire de sur-course comporte une fin de course positionnant le siège contre un obstacle situé devant le siège (10).

3. Procédé selon la revendication 2, **caractérisé en ce que** la demande de mouvement vers l'avant est effectuée par un occupant assis derrière le siège (10).

4. Procédé selon la revendication 3, **caractérisé en ce que** la détection de la demande de mouvement vers l'avant est effectuée par la détection de l'utilisation d'un commutateur (30) accessible uniquement à l'occupant (100) assis derrière le siège (10).

5. Siège (10) de véhicule pour la mise en oeuvre du procédé selon l'une des revendications 1 à 4, comprenant au moins un capteur de présence occupant apte à détecter la présence d'un occupant sur le siège (10) et au moins une glissière électrique avec deux capteurs de fin de course (21, 22) définissant un première plage de positions, **caractérisé en ce qu'**il comporte un troisième capteur de fin de course (23) définissant une deuxième plage de positions comprenant la première plage de positions et une plage supplémentaire de sur-course vers l'avant.

6. Siège (10) selon la revendication 5, **caractérisé en ce que** le troisième capteur de fin de course (23) définit une position du siège (10) contre un obstacle situé devant le siège (10).

7. Véhicule automobile comportant au moins un siège (10) selon la revendication 5 ou 6 et dont la position est commandée par le procédé selon l'une des revendications 1 à 4.

## Patentansprüche

1. Verfahren zur elektrischen Steuerung eines Fahrzeugsitzes (10), die folgenden Schritte umfassend:
- Erkennen der Präsenz eines Insassen auf dem Sitz (10);
- Erkennen eines Befehls zur Vorwärtsbewegung des Sitzes (10);
- Freigeben der Vorwärtsbewegung des Sitzes (10) in einem ersten Positionsbereich wenn beim Erkennungsschritt ein Insasse auf dem Sitz (10) erkannt wurde;
- Freigeben der Vorwärtsbewegung in einem zweiten Positionsbereich, den ersten Positionsbereich und einen zusätzlichen Überwegbereich nach vorne umfassend, wenn beim Erkennungsschritt kein Insasse auf dem Sitz (10) erkannt wurde.

2. Verfahren nach Anspruch 1, **dadurch gekennzeichnet, dass** der zusätzliche Überwegbereich eine Endlage umfasst, die den Sitz an einem Hindernis positioniert, das sich vor dem Sitz (10) befindet.

3. Verfahren nach Anspruch 2, **dadurch gekennzeichnet, dass** der Befehl zur Vorwärtsbewegung durch einen Insassen erfolgt, der hinter dem Sitz (10) sitzt.

4. Verfahren nach Anspruch 3, **dadurch gekennzeichnet, dass** das Erkennen des Befehls zur Vorwärtsbewegung durch das Erkennen der Verwendung eines Wahlschalters (30) erfolgt, der nur für den Insassen (100) erreichbar ist, der hinter dem Sitz (10) sitzt.

5. Fahrzeugsitz (10) zum Anwenden des Verfahrens nach einem der Ansprüche 1 bis 4, der zumindest einen Präsenzmelder für einen Insassen umfasst, der in der Lage ist, die Präsenz eines Insassen auf dem Sitz (10) zu erkennen, und zumindest eine elektrische Gleitschiene mit zwei Endschaltern (21, 22), die einen ersten Positionsbereich definieren, **dadurch gekennzeichnet, dass** er einen dritten Endschalter (23) umfasst, der einen zweiten Positionsbereich definiert, der den ersten Positionsbereich und einen zusätzlichen Überwegbereich nach vorne umfasst.

6. Sitz (10) nach Anspruch 5, **dadurch gekennzeichnet, dass** der dritte Endschalter (23) eine Position des Sitzes (10) an einem Hindernis definiert, das sich vor dem Sitz (10) befindet.

7. Kraftfahrzeug, zumindest einen Sitz (10) nach Anspruch 5 oder 6 umfassend, dessen Position durch das Verfahren nach einem der Ansprüche 1 bis 4 gesteuert wird.

## Claims

1. Method for electrically controlling a seat (10) of a vehicle comprising the following steps:
- detecting the presence of an occupant on the seat (10);
- detecting a forward movement request of the seat (10);
- authorising the forward movement of the seat (10) in a first range of positions if an occupant is detected in the seat (10) in the detection step;
- authorising the forward movement in a second range of positions comprising the first range of positions and an additional forward over-travel range, if no occupants are detected in the seat (10) during the detection step.

2. Method according to claim 1, **characterised in that** the additional over-travel range comprises an end-of-travel that positions the seat against an obstacle located in front of the seat (10).

3. Method according to claim 2, **characterised in that** the forward movement request is carried out by an occupant seated behind the seat (10).

4. Method according to claim 3, **characterised in that** the detecting of a forward movement request is carried out by detecting the use of a switch (30) that is accessible solely to the occupant (100) seated behind the seat (10).

5. Seat (10) of a vehicle for implementing the method according to one of claims 1 to 4, comprising at least one occupant presence sensor able to detect the presence of an occupant on the seat (10) and at least one electric slider with two end-of-travel sensors (21, 22) defining a first range of positions, **characterised in that** it comprises a third end-of-travel sensor (23) that defines a second range of positions comprising the first range of positions and an additional forward over-travel range.

6. Seat (10) according to claim 5, **characterised in that** the third end-of-travel sensor (23) defines a position of the seat (10) against an obstacle located in front of the seat (10).

7. Motor vehicle comprising at least one seat (10) according to claim 5 or 6 and of which the position is controlled by the method according to one of claims 1 to 4.
